(19) **Europäisches Patentamt / European Patent Office / Office européen des brevets**

(11) **EP 4 361 945 A1**

(12) # EUROPEAN PATENT APPLICATION
published in accordance with Art. 153(4) EPC

(43) Date of publication:
**01.05.2024 Bulletin 2024/18**

(21) Application number: **22840984.3**

(22) Date of filing: **14.04.2022**

(51) International Patent Classification (IPC):
*G06T 7/00* (2017.01)      *G06T 7/11* (2017.01)
*G06F 18/40* (2023.01)     *G06N 3/04* (2023.01)
*G06N 3/08* (2023.01)

(52) Cooperative Patent Classification (CPC):
Y02A 50/30

(86) International application number:
**PCT/CN2022/086750**

(87) International publication number:
**WO 2023/284340 (19.01.2023 Gazette 2023/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.07.2021 CN 202110802685**

(71) Applicant: **Beijing Xiaoying Technology Co., Ltd.
Beijing 100084 (CN)**

(72) Inventors:
- **LI, Bairui
  Beijing 100084 (CN)**
- **LIAN, Heqing
  Beijing 100084 (CN)**

(74) Representative: **LLR
2, rue Jean Lantier
75001 Paris (FR)**

(54) **METHOD FOR CLASSIFYING SPECIES AND DEVELOPMENT STAGE OF PARASITE AND CLASSIFYING IMAGE PIXEL FROM BOTTOM TO TOP**

(57)    The present application provides a method of classifying development stages of parasite species and image pixels from bottom to top, which uses a microscope or a slide automatic scanning device to digitize a slide, constructs a deep learning algorithm based on Transformer to detect the parasites view by view, and uses functions focal_loss, CB_focal_loss and Jaccard to suppress long-tailed distribution. The method of the present application is simple, can identify the parasites only with a thin blood film, may further reduce the time and the labor cost of detection, and improve the level of detecting the parasites in local areas. Further, the method may identify species and development stages of the parasites, is high in efficiency, is fast in speed, and reduces the labor cost and a regional medical difference.

FIG. 1

**Description**

**CROSS REFERENCE**

The present application claims the priority of Chinese Patent Application No. 202110802685.1, filed on July 15, 2021 and entitled "Method of Classifying Development Stages of Parasite Species and Image Pixels From Bottom To Top", which is incorporated herein by reference in its entirety.

**TECHNICAL FIELD**

The present application relates to the technical field of computing, calculation and counting, and in particular to a method of classifying development stages of parasite species and image pixels from bottom to top.

**BACKGROUND**

Parasite detection is a main means of public prevention and control in hospitals, disease control centers, etc. Common parasites include *Plasmodium, Amoeba, Leishmania donovani, Toxoplasma gondii, Babesia canis, Trypanosoma evansi, Leucocytozoon carinii,* etc. Flow cytometry may screen parasites, suggest the likelihood of existence of the parasites, but cannot detect the parasites.

At present, the methods for detecting parasites mainly include the following:

(1) Microscopy: It is a conventional method of diagnosing malaria that a doctor microscopically observes a peripheral blood smear to examine plasmodium. It is usually to observe a whole blood slide under a 100x objective of a microscope. It is generally to view thousands of fields of view, which takes one day. If the plasmodium is found, the result may be positive, which can be used as a reliable basis for diagnosis. One negative result can not deny the diagnosis, and multiple reexaminations are needed.

(2) Culture: Under certain nutritional conditions, microorganisms in the samples are cultured, and the growth characteristics of propagation and amplification are observed to determine whether there are parasites.

(3) Antigen or antibody detection: It is presumed whether there are parasites in microorganisms by injecting a specific antibody (or antigen) into the sample and then observing whether a specific reaction occurs.

(4) Gene detection: The nucleic acid sequences of the parasites are detected using nucleic acid hybridization, a gene chip, a polymerase reaction and other technologies, to determine whether there are parasites.

However, these detection methods have some limitations. The microscopy method is closely related to the professional level of testing personnel, and has the problems of low efficiency, slow speed, high work intensity, easiness in fatigue of personnel, easiness in missed detection and the like. The culture method generally requires the parasites to grow on a medium for 18-24 h, and thus is long in cycle. The antigen or antibody detection method requires a clear antigen-antibody reaction, or needs to enumerate all the ways. The gene detection method has a high cost, and is difficult to be popularized in some areas with bad conditions (such as Africa and remote mountainous areas).

At present, there are also previous cases of detecting the parasites using mathematical models. A traditional loss function is used in establishment of an existing parasite detection models:

$$H(X) = -\sum_{i=1}^{n} p(x_i) log(p(x_i))$$

.

Due to a long tail phenomenon of parasite distribution, the loss function can not distinguish samples of the tail category from the samples of the head category with regard to a contribution weight to update the whole model. Moreover, simple samples and difficult samples have the same contribution to the loss function. Therefore, the long tail problem, as the biggest problem in parasite detection and classification, cannot be overcome, that is, it is easy to miss detection of the parasites, is poor in effect, and is not practical.

**SUMMARY**

The present application aims to solve the detection and classification problem for parasites in blood, and provides a method of classifying development stages of parasite species and image pixels from bottom to top, which uses a microscope or a slide automatic scanning device to digitize a slide, constructs a deep learning algorithm based on Transformer to detect the parasites view by view, and uses functions focal_loss, CB_focal_loss and Jaccard to suppress long-tailed distribution. The method is simple, and can identify the parasites only with a thin blood film; the method may further reduce the time and the labor cost of detection, and improve the level of detecting the parasites in local areas; and the method may identify species and development stages of the parasites, is high in efficiency, is fast in speed, and reduces the labor cost and a regional medical difference.

The present application provides a method of classifying development stages of parasite species and image pixels from bottom to top, including the following steps:

51, preparation of a training set and a test set: seamlessly photographing a blood slide for labeling with a microscopic imaging device view by view to acquire images, seamlessly connecting boundary parts of the images by stitching adjacent images to obtain an image set for labeling; and labeling positions, categories, development stages of the parasite and categories of pixel points on a single image in the image set for labeling, generating labeling data, and dividing the labeling data into the training set and the test set;

S2, construction of a blood parasite classification-detection-segmentation model based on Transformer: constructing a blood parasite classification-detection-segmentation model based on Transformer by optimizing a model using a specific loss function to suppress long-tailed distribution, and training the model using the training set and the test set to obtain the blood parasite classification-detection-segmentation model; S3, whole slide collection and stitching: seamlessly photographing a to-be-detected blood slide with the microscopic imaging device view by view to acquire images, and seamlessly connecting boundary parts of the images by stitching adjacent images, to obtain a to-be-detected image set;

S4, detection: inputting the to-be-detected image set into the blood parasite classification-detection-segmentation model, detecting and classifying parasite species and the development stages of blood parasite to obtain a detection result, and outputting the detection result to complete detection.

In the method of classifying the development stages of the parasite species and the image pixels from bottom to top of the present application, as a preferred approach, step S2 includes:

S21, construction of the model: constructing a topological structure of the blood parasite classification-detection-segmentation model based on Transformer, wherein the blood parasite classification-detection-segmentation model is used for detecting the positions, the categories, the development stages of the parasites and the categories of pixel points on the single images;

S22, construction of an optimized object: optimizing the blood parasite classification-detection-segmentation model based on Transformer by using functions focal_loss, CB_focal_loss and Jaccard, and suppressing long-tailed distribution with the loss function; and

S23, training of model: training the model with the training set and the test set, to obtain the blood parasite classification-detection-segmentation model.

In the method of classifying the development stages of the parasite species and the image pixels from bottom to top of the present application, as a preferred approach, in step S21, the blood parasite classification-detection-segmentation model based on Transformer includes an encoder, a decoder and a multi-layer neural network mapping layer that are sequentially arranged.

The encoder includes at least two sequentially connected multi-head self-attention modules, and is used for dividing the single image into k image blocks, linearly transforming the image blocks by a query matrix $Q_i$, a value matrix $V_i$ and a keyword matrix $K_i$ of a first multi-head self-attention module to obtain feature expressions of the image blocks, superimposing the feature expressions with a feature of the multi-head self-attention module and then inputting into the next multi-head self-attention module, until the last multi-head self-attention module obtains a final feature expression of the image blocks, and superimposing the final feature expression of the image blocks with a position code to obtain an input feature of the decoder.

The decoder includes at least one sequentially connected multi-head self-attention module, and is used for decoding the input feature of the decoder by at least two multi-head self-attention modules to obtain a decoded feature vector.

The multi-layer neural network mapping layer is used for calculating the decoded feature vector to obtain a corresponding feature vector, and performing linear mapping to obtain a coordinate of a detection bounding box ($x_n$, $y_n$, $w_n$, $h_n$) and a confidence level.

In the method of classifying the development stages of the parasite species and the image pixels from bottom to top of the present application, as a preferred approach, the single image has a data pixel of 608*608, whrerein k is 16; and an image block pixel is 38*38.

The encoder includes four sequentially connected multi-head self-attention modules; the decoder includes four sequentially connected multi-head self-attention modules; and the multi-layer neural network is a three-layer fully connected layer neural network.

In the method of classifying the development stages of the parasite species and the image pixels from bottom to top of the present application, as a preferred approach, in step S21, an algorithm for constructing the blood parasite classification-detection-segmentation model based on Transformer further includes the following one or more: SSD, FPN, Fast R-CNN, faster R-CNN, mask R-CNN, efficentNet, YOLO/v2/v3/v4/v5, RetianNet, Deeplabv1/v2v/3, Unet, MaskRcnn.

In the method of classifying the development stages of the parasite species and the image pixels from bottom to top of the present application, as a preferred approach, in step S22, the function focal_loss is:

$$\mathrm{FL}(p_t) = -\alpha_t(1 - p_t)^\gamma \log(p_t)_,$$

where $FL(p_t)$ is improved cross entropy; $\gamma$ is a focusing parameter; $\alpha$ is an inter-category weight parameter; and $\alpha(1 - p_t)$ is a modulation coefficient.

In the method of classifying the development stages of the parasite species and the image pixels from bottom to top of the present application, as a preferred approach,
$\alpha \in (0, +\infty)$, $p_t \in [0,1]$, $\gamma \in \{1,2,3\}$.

The function focal_loss is used for suppressing long-tailed distribution with a small number of parasites and a large number of background categories, and the background categories are blood cells.

If a sample containing parasites is mistakenly identified as the background category, the modulation coefficient tends to 1, and the sample containing parasites is a difficult sample. The function focal_loss makes the blood parasite classification-detection-segmentation model based on Transformer focus more on the difficult sample during training by increasing a weight of the difficult sample.

In the method of classifying the development stages of the parasite species and the image pixels from bottom to top of the present application, as a preferred approach, in step S22, the function CB_focal is:

$$\mathrm{CB}(\mathbf{p}, y) = \frac{1}{E_{n_y}} \mathcal{L}(\mathbf{p}, y) = \frac{1 - \beta}{1 - \beta^{n_y}} \mathcal{L}(\mathbf{p}, y)$$

where

$$E_n = (1 - \beta^n)/(1 - \beta)_;$$

$$\beta = (N - 1)/N_;$$

En is an expected value of an effective sample of a certain category; and N is a total number of samples of this category.

The function CB_focal is used for alleviating the long tail problem in the parasite classification problems by reverse weighting with an effective sample number.

In the method of classifying the development stages of the parasite species and the image pixels from bottom to top of the present application, as a preferred approach, in step S22, the loss function Jaccard is:

$$J(A, B) = \frac{|A \cap B|}{|A \cup B|} = \frac{|A \cap B|}{|A| + |B| - |A \cap B|}_,$$

where A is a predicted value, and B is a true value.

The loss function Jaccard is used for alleviating imbalance samples with a small number of pixel points occupied by positive samples and a large number of pixel points occupied by negative samples.

In the method of classifying the development stages of the parasite species and the image pixels from bottom to top of the present application, as a preferred approach, in step S4, if the parasites are plasmodium, the plasmodium species category of each image in the image set are fused to determine the final species category of the blood smear, and the period category is determined by the specific period of the plasmodium in the single image.

A specific method of the present application is that: first, an image of 608*608 is input, and then divided into 16 parts according to a pixel size of 38*38. The 16 image blocks, as the image blocks of which attention coefficients are needed to be calculated, are sent into the "multi-head self-attention (M-SELF-ATTENTION)" modules of the encoder for calculating correlations between one image block and other image blocks. For each image block, there is a query matrix Qi, a value matrix Vi, and a keyword matrix Ki. The operation rules of the "multi-head self-attention" module are as follows:

1) For the current image block, the query matrix Qi is set, and the 38*38 image block is vectorized as the value matrix Vi, and a matrix operation is performed on Qi and Vi to obtain a linearly transformed query matrix Qi*.

2) For other image blocks, the keyword matrices Ki are set respectively; and the current value matrix Vi is used to perform the matrix operation on Ki and Vi to obtain a linearly transformed keyword matrices Ki*.

3) Based on Qi* calculated in 1), the 16 matrices calculated based on 2) are combined into a large matrix K*, a correlation matrix W is obtained by a matrix multiplication operation of Q* and K*, and the correlation (0-1) between this image block and other image blocks is obtained by normalizing W

4) The correlation matrix is multiplied by the value matrices Vi of other image blocks to obtain weighted features based on different image blocks. The features are mapped by means of a fully connected layer, to obtain a final feature expression of the image block, where the fully connected layer is used for controlling a final feature dimension.

5) The final feature is superimposed with the features (or images) input into "multi-head self-attention", to obtain a new feature as an input of the next level of "multi-head self-attention". The above new feature is sent into the second level "multi-head self-attention" module.

The above operations are repeated to obtain the final feature in the encoder. The whole coding process has a total of four levels of "multi-head self-attention" calculations. Then, decoding is performed, and position information of the feature obtained by the encoder is encoded. The position code is "superimposed" with the feature obtained by the encoder, to obtain a final input feature of the decoder. The feature is sent into the decoder containing a total of four levels of "multi-head attention" operation, which is similar to the calculation process of the "multi-head attention" operation of the encoder. Finally, the decoder outputs the decoded feature vector. The feature vector is sent to the three-layer fully connected layer corresponding to a detection bounding box, a category and a mask respectively, to obtain feature vectors unique to different tasks. The feature vectors are linearly mapped to obtain a coordinate of the detection bounding box, category information of each detection bounding box, and category information of each pixel point. According to a detection result of a detection head, for the pixel points in the detection bounding box, the category information is counted, to obtain a percentage of the pixel category with the largest proportion in the detection bounding box as a confidence level of a pixel point level of cell category information in the detection bounding box; the confidence level and a category confidence level obtained by a classification head are weighted and fused to obtain a final category probability; and the category with the highest probability is selected as a final output category.

$$PE_{(pos, 2i)} = sin(pos/10000^{2i/d_{model}})$$

$$PE_{(pos, 2i+1)} = cos(pos/10000^{2i/d_{model}})$$

.

wherein *pos* is a position number of the image block in the whole image; *i* is a dimension of the position code; and $d_{model}$ is a total dimension of the position code.

Due to a small number of the parasites in the blood relative to a number of blood cells, and different numbers of samples collected from the parasites for different types of cells, the whole model is affected by an offset of long-tailed distribution, that is, the classification model may tend to identify the head category with a larger number during category recognition, resulting in a recognition error. Therefore, focal_loss and CB_focal_loss are applied separately.

4.1 Detection head focal_loss

During detection, due to the small number of the parasites, and the background category of detection being a large number of blood cells, the parasites are of the tail category, and have the tendency to be identified as the background category. At this time, if there is a misclassified sample, pt is very small, and then its modulation coefficient tends to 1, that is, the sample is a difficult sample, and its contribution to the whole loss is 100%. When pt tends to 1, the sample is correctly classified, and is a simple sample, and its modulation coefficient tends to 0. At this time, the contribution of the sample to the total loss is very small, so the loss function may effectively alleviate the detection problem caused by long-tailed distribution.

4.2 Classification head CB_focal

Due to different numbers of the parasites in different categories during parasite data collection, the model faces a serious long-tail problem in classification and identification, that is, a classification result tends to a head parasite category with a large number. Similar with the loss functions of the detection head, improvements are further made in terms of the classification problem.

An effective sample theory is employed, that is, in a deep learning model, samples of different categories have different contribution degrees to model optimization; and moreover, for a certain category, there is a saturated data volume, so that a continued increase in data in this category has no significant effect on model optimization, and then the loss functions may be weighted by using an effective sample number.

Assuming that a total capacity of a certain category of samples is $N$, the collected data is all sampled from the total set. There are

$$E_n = (1-\beta^n)/(1-\beta) \tag{1}$$

$$\beta = (N-1)/N \tag{2}$$

where $En$ is an expected value of an effective sample of a certain category; and $N$ is a total number of samples of this category.

When n=1, the effective sample is expected as 1. Assuming that n=N-1, the above equation is workable. Then, when n=N, the probability of p=En-1/N coincides with the sample that has been sampled previously. At this time,

$$E_n = pE_{n-1} + (1-p)(E_{n-1}+1) = 1 + \frac{N-1}{N}E_{n-1}. \tag{3}$$

It can be seen from the equations (1), (2) and (3) that

$$E_n = 1 + \beta\frac{1-\beta^{n-1}}{1-\beta} = \frac{1-\beta+\beta-\beta^n}{1-\beta} = \frac{1-\beta^n}{1-\beta},$$

and also due to

$$E_n = (1-\beta^n)/(1-\beta) = \sum_{j=1}^{n}\beta^{j-1}. \tag{4},$$

it can be get that

$$N = \lim_{n\to\infty}\sum_{j=1}^{n}\beta^{j-1} = 1/(1-\beta). \tag{5}.$$

However, because an exact total sample number of a certain category cannot be known, a number of collected samples of a certain category is used for replacing a total effective sample number. Therefore, at this time, there is a weighted loss function:

$$\mathrm{CB}(\mathbf{p}, y) = \frac{1}{E_{n_y}} \mathcal{L}(\mathbf{p}, y) = \frac{1 - \beta}{1 - \beta^{n_y}} \mathcal{L}(\mathbf{p}, y)$$

The long tail problem in the classification problem may be alleviated to a certain degree by reverse weighting with an effective sample number.

4.3 Semantic segmentation head loss function Jaccard

Similarly, in a pixel point classification (semantic segmentation) task, it is also faced with the problem that a small number of the pixel points occupied by the positive samples, and a large number of the pixel points occupied by the negative samples, resulting in a more serious problem of imbalance samples. The loss function Jaccard is used to alleviate this problem.

$$J(A, B) = \frac{|A \cap B|}{|A \cup B|} = \frac{|A \cap B|}{|A| + |B| - |A \cap B|}$$

4.4 Determination on category

The category of the plasmodium is formed by two levels: the first level is a specific species; and the second level is the development stage of the species. The two levels collectively constitute the category of the plasmodium. Other parasites have only one-level category. Generally, there is only one species on one blood slide. Therefore, the species can be only identified in combination with the category of each parasite in the whole blood slide. The images acquired by the microscopic imaging device form a blood slide image database. For each image in the database, the algorithm shown in step 3 is applied to detect a single parasite and determine its species and development stage category. Then, the species of the parasites on the whole slide are fused to determine a final parasite species.

The present application has the following advantages:

(1) The present application proposes whole slide collection and stitches the images adjacent in physical positions to avoid missed detection, which is very significant for samples with a small number of parasites.

(2) The present application uses the transformer technology to integrate parasite detection and classification, without additional modules for segmentation and classification; and moreover, the present application uses a category fusion mechanism, making the final recognition result more accurate.

(3) The present application uses the functions focal_loss, CB_focal_loss and Jaccard to effectively suppress long-tailed distribution of the number and the species of the parasites, which avoids missed detection and improves the detection accuracy.

(4) The present application can identify the parasites only with a thin blood film, may further reduce the time and the labor cost of detection, and improve the level of detecting the parasites in local areas. Further, the present application may identify the species and the development stages of the parasites, is high in efficiency, is fast in speed, and reduces the labor cost and a regional medical difference.

**BRIEF DESCRIPTION OF THE DRAWINGS**

FIG. 1 is a flowchart of a method of classifying development stages of parasite species and image pixels from bottom to top in embodiments 1-2;

FIG. 2 is a flowchart of step S2 in a method of classifying development stages of parasite species and image pixels from bottom to top in embodiments 1-2;

FIG. 3 is a flowchart of a method of classifying development stages of parasite species and image pixels from bottom to top in embodiment 3;

FIG. 4 is a schematic diagram of an architecture of a parasite detection and classification model in a method of classifying development stages of parasite species and image pixels from bottom to top in embodiment 3;

FIG. 5 is a flowchart of a species and development stage classification algorithm in a method of classifying development stages of parasite species and image pixels from bottom to top in embodiment 3;

FIG. 6 is a flowchart of a category fusion algorithm in a method of classifying development stages of parasite species and image pixels from bottom to top in embodiment 3.

## DETAILED DESCRIPTION

The technical solutions in embodiments of the present application are clearly and completely described below in combination with the accompanying drawings in the embodiments of the present application.

Apparently, the embodiments described are merely some embodiments rather than all embodiments of the present application.

Embodiment 1

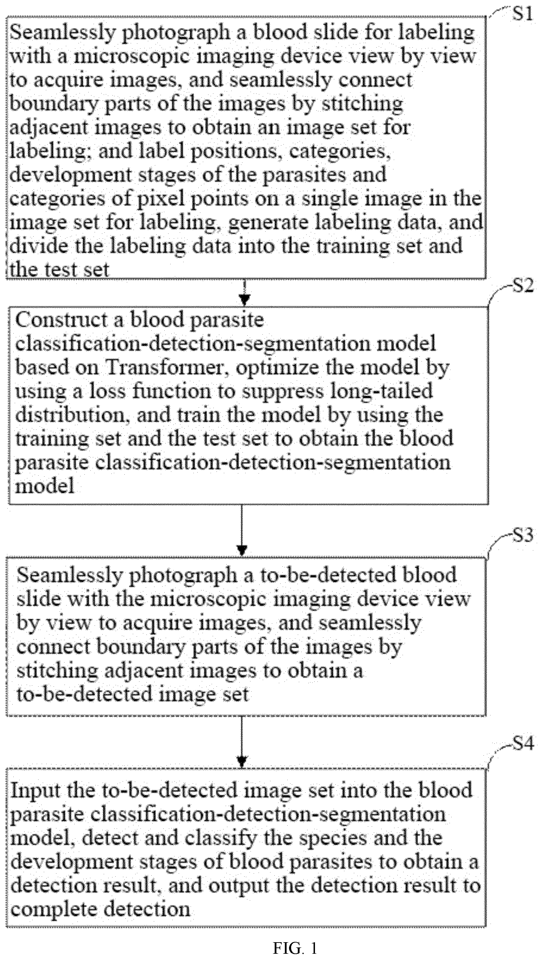

As shown in FIG. 1, a method of classifying development stages of parasite species and image pixels from bottom to top includes the following steps:

51, preparation of a training set and a test set: seamlessly photographing a blood slide for labeling with a microscopic imaging device view by view to acquire images, and seamlessly connecting boundary parts of the images by stitching adj acent images to obtain an image set for labeling; and labeling positions, categories, development stages of the parasite and categories of pixel points on a single image in the image set for labeling, generating labeling data, and dividing the labeling data into the training set and the test set.

S2, construction of a blood parasite classification-detection-segmentation model based on Transformer: constructing a blood parasite classification-detection-segmentation model based on Transformer by optimizing a model using a loss function to suppress long-tailed distribution, and training the model using the training set and the test set to obtain the blood parasite classification-detection-segmentation model.

S3, whole slide collection and stitching: seamlessly photographing a to-be-detected blood slide with the microscopic imaging device view by view to acquire images, and seamlessly connecting boundary parts of the images by stitching adjacent images to obtain a to-be-detected image set.

S4, detection: inputting the to-be-detected image set into the blood parasite classification-detection-segmentation model, detecting and classifying the species and the development stages of blood parasite to obtain a detection result, and outputting the detection result to complete detection.

Embodiment 2

As shown in FIG. 1, a method of classifying development stages of parasite species and image pixels from bottom to top includes the following steps:

51, preparation of a training set and a test set: seamlessly photographing a blood slide for labeling with a microscopic imaging device view by view to acquire images,, and seamlessly connecting boundary parts of the images by stitching adj acent images, to obtain an image set for labeling; and labeling positions, categories, development stages of the parasites and categories of pixel points on a single image in the image set for labeling, generating labeling data, and dividing the labeling data into the training set and the test set.

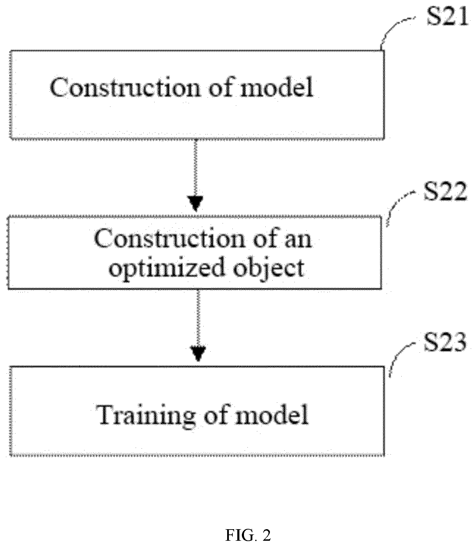

S2, construction of a blood parasite classification-detection-segmentation model based on Transformer: constructing a blood parasite classification-detection-segmentation model based on Transformer by optimizing a model using a loss function to suppress long-tailed distribution, and training the model using the training set and the test set to obtain the blood parasite classification-detection-segmentation model. As shown in FIG. 2, S21, construction of the model: constructing a topological structure of the blood parasite classification-detection-segmentation model based on Transformer, wherein the blood parasite classification-detection-segmentation model is used for detecting the positions, the categories, the development stages of the parasites and the categories of pixel points on the single image.

The blood parasite classification-detection-segmentation model based on Transformer includes an encoder, a decoder and a multi-layer neural network mapping layer that are sequentially arranged.

The encoder includes at least two sequentially connected multi-head self-attention modules, and is used for dividing the single image into k image blocks, linearly transforming the image blocks by a query matrix $Q_i$, a value matrix $V_i$ and a keyword matrix $K_i$ of a first multi-head self-attention module to obtain feature expressions of the image blocks, superimposing the feature expressions with a feature of the multi-head self-attention module and then inputting into the next multi-head self-attention module, until the last multi-head self-attention module obtains a final feature expression of the image blocks, and superimposing the final feature expression of the image blocks with a position code to obtain an input feature of the decoder.

The decoder includes at least one sequentially connected multi-head self-attention module, and is used for decoding the input feature of the decoder by at least two multi-head self-attention modules to obtain a decoded feature vector.

The multi-layer neural network mapping layer is used for calculating the decoded feature vector to obtain a corresponding feature vector, and performing linear mapping to obtain a coordinate of a detection bounding box ($x_n$, $y_n$, $w_n$, $h_n$) and a confidence level.

The single image has a data pixel of 608*608, wherein k is 16; and an image block pixel is 38*38.

The encoder includes four sequentially connected multi-head self-attention modules; the decoder includes four sequentially connected multi-head self-attention modules; and the multi-layer neural network is a three-layer fully connected layer neural network.

An algorithm for constructing the blood parasite classification-detection-segmentation model based on Transformer further includes the following one or more:

SSD, FPN, Fast R-CNN, faster R-CNN, mask R-CNN, efficentNet, YOLO/v2/v3/v4/v5, RetianNet, Deeplabv1/v2v/3, Unet, MaskRcnn.

S22, construction of an optimized object: optimizing the blood parasite classification-detection-segmentation model based on Transformer by using functions focal_loss, CB_focal_loss and Jaccard, and suppressing long-tailed distribution with the loss function; and

The function focal _loss is:

$$\mathrm{FL}(p_t) = -\alpha_t(1 - p_t)^\gamma \log(p_t),$$

where $FL(p_t)$ is improved cross entropy; $\gamma$ is a focusing parameter; $\alpha$ is an inter-category weight parameter; and $\alpha(1 - p_t)$ is a modulation coefficient.

$$\alpha \in (0, +\infty), \quad p_t \in [0,1], \quad \gamma \in \{1,2,3\}.$$

The function focal_loss is used for suppressing long-tailed distribution with a small number of parasites and a large number of background categories, and the background categories are blood cells.

If a sample containing parasites is mistakenly identified as the background category, the modulation coefficient tends to 1, and the sample containing parasites is a difficult sample. The function focal_loss makes the blood parasite classification-detection-segmentation model based on Transformer focus more on the difficult sample during training by increasing a weight of the difficult sample.

The function CB_focal is:

$$\mathrm{CB}(\mathbf{p}, y) = \frac{1}{E_{n_y}} \mathcal{L}(\mathbf{p}, y) = \frac{1 - \beta}{1 - \beta^{n_y}} \mathcal{L}(\mathbf{p}, y)$$

where

$$E_n = (1 - \beta^n)/(1 - \beta);$$

$$\beta = (N - 1)/N,$$

$En$ is an expected value of an effective sample of a certain category; and $N$ is a total number of samples of this category.

The function CB_focal is used for alleviating the long tail problem in the parasite classification problems by reverse weighting with an effective sample number.

The loss function Jaccard is:

$$J\left(A,B\right) = \frac{|A \cap B|}{|A \cup B|} = \frac{|A \cap B|}{|A| + |B| - |A \cap B|}$$

,

where A is a predicted value, and B is a true value.

The loss function Jaccard is used for alleviating imbalance samples with a small number of pixel points occupied by positive samples and a large number of pixel points occupied by negative samples.

S23, training of model: training the model with the training set and the test set, to obtain the blood parasite classification-detection-segmentation model.

S3, whole slide collection and stitching: seamlessly photographing a to-be-detected blood slide with the microscopic imaging device view by view to acquire images, and seamlessly connecting boundary parts of the images by stitching adjacent images to obtain a to-be-detected image set.

S4, Detection: inputting the to-be-detected image set into the blood parasite classification-detection-segmentation model; detecting and classifying the species and the development stages of blood parasite to obtain a detection result, and outputting the detection result; and if the parasites are plasmodium, the plasmodium species category of each image in the image set are fused to determine the final species category of the blood smear, and the period category is determined by the specific period of the plasmodium in the single image, to complete detection.

Embodiment 3

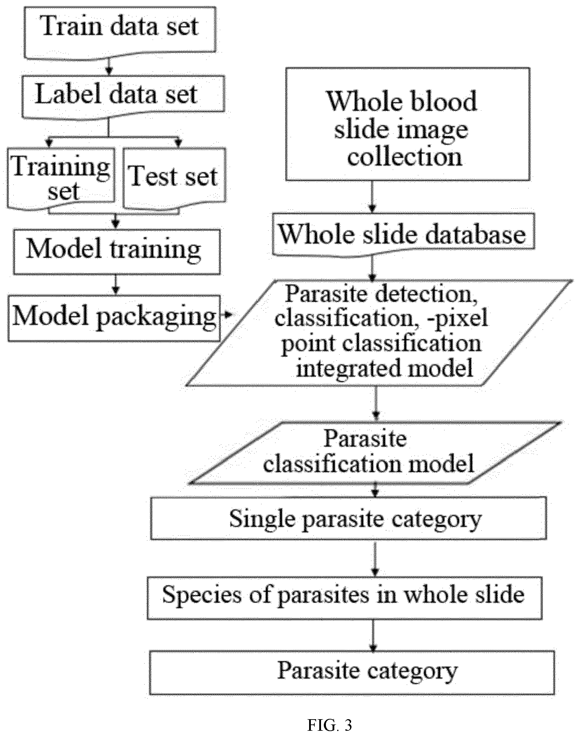

As shown in FIG. 3, a method of classifying development stages of parasite species and image pixels from bottom to top includes the following steps:

1. Whole slide collection and stitching

In order to avoid missed detection of the parasites, the present application first seamlessly photographs a blood slide with the microscopic imaging device view by view to acquire images, and seamlessly connects boundary parts of the images by stitching adjacent images, to avoid missed detection on any possible parasite.

2. Labeling of parasites data

The positions, category information of the parasites and category information of pixel points are labeled by a special doctor on a single field of view with a specific labeling tool. After a labeling amount reaches a certain scale, the labeled data is divided into a training set and a test set according to a certain proportion, which provides data for constructing a deep learning network model. 3. Construction of blood parasite classification-detection-segmentation model based on Transformer The present application constructs an algorithm for detection classification of the parasites and pixel classification from bottom to top.

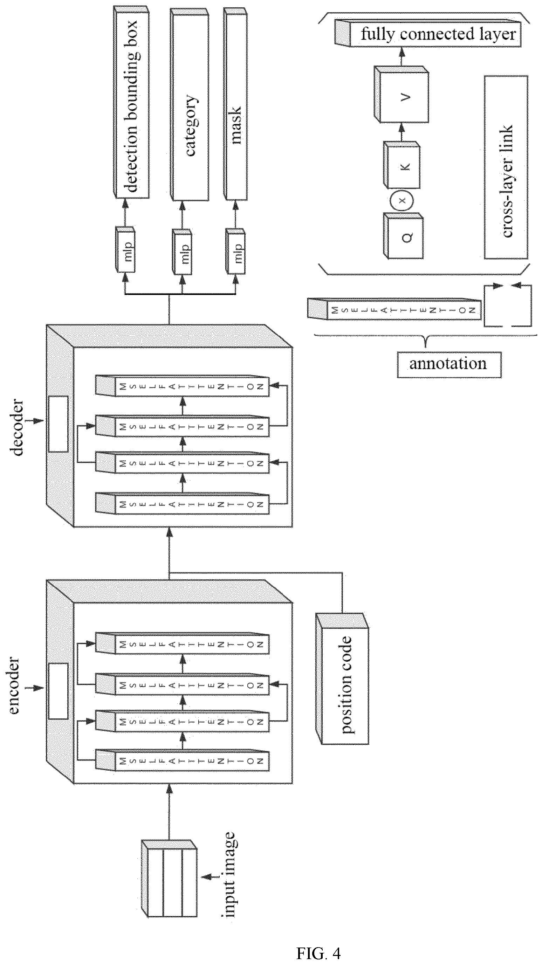

As shown in FIG. 4, first, an image of 608*608 is input, and then divided into 16 parts according to a pixel size of 38*38. The 16 image blocks, as the image blocks of which attention coefficient are needed to be calculated, are sent into the "multi-head self-attention (M-SELF-ATTENTION)" modules of the encoder for calculating correlations between one image block and other image blocks. For each image block, there is a query matrix Qi, a value matrix Vi, and a keyword matrix Ki. An operation rule of the "multi-head self-attention" module is as follows:

1) For the current image block, the query matrix Qi is set, and the 38*38 image block is vectorized as the value matrix Vi, and a matrix operation is performed on Qi and Vi to obtain a linearly transformed query matrix Qi*.

2) For other image blocks, the keyword matrices Ki are set respectively; and the current value matrix Vi is used to perform the matrix operation on Ki and Vi to obtain a linearly transformed keyword matrices Ki*.

3) Qi* calculated based on 1) and 16 matrices calculated based on 2) are combined into a large matrix K*, a correlation matrix W is obtained by a matrix multiplication operation of Q* and K*, and the correlation (0-1) between this image block and other image blocks is obtained by normalizing W

4) The correlation matrix is multiplied by the value matrices Vi of other image blocks to obtain weighted features based on different image blocks. The features are mapped by means of a fully connected layer, to obtain a final feature expression of the image block, where the fully connected layer is used for controlling a feature dimension of the final expression.

5) The final feature is superimposed with the features (or images) input into "multi-head self-attention", to obtain a new feature as an input of the next level of "multi-head self-attention". The above new feature is sent into the second-level "multi-head self-attention" module.

The above operations are repeated to obtain the final feature in the encoder. The whole coding process has a total of four levels of "multi-head self-attention" calculations. Then, decoding is performed, and position information of the feature obtained by the encoder is encoded. The position code is "superimposed" with the feature obtained by the encoder, to obtain a final input feature of the decoder. The feature is sent into the decoder containing a total of four levels of "multi-head attention" operation, which is similar to the calculation process of the "multi-head attention" operation of the encoder. Finally, the decoder outputs the decoded feature vector. The feature vector is sent to the three-layer fully connected layer corresponding to a detection bounding box, a category and a mask respectively, to obtain feature vectors unique to different tasks. The feature vectors are linearly mapped to obtain a coordinate of the detection bounding box, category information of each detection bounding box, and category information of each pixel point. According to a detection result of a detection head, for the pixel points in the detection bounding box, the category information is counted, to obtain a percentage of the pixel category with the largest proportion in the detection bounding box as a confidence level of a pixel point level of cell category information in the detection bounding box; the confidence level and a category confidence level obtained by a classification head are weighted and fused to obtain a final category probability; and the category with the highest probability is selected as a final output category.

$$PE_{(pos,2i)} = sin(pos/10000^{2i/d_{model}})$$

$$PE_{(pos,2i+1)} = cos(pos/10000^{2i/d_{model}})$$

Except the model proposed by the present application, SSD, FPN, Fast R-CNN , faster R-CNN, mask R-CNN, efficentNet, YOLO/v2/v3/v4/v5, RetianNet, Deeplabv1/v2v/3, Unet, MaskRcnn and other algorithms may further be completed.

4. Suppression of long-tailed distribution

Due to a small number of the parasites in the blood relative to a number of blood cells, and different numbers of samples collected from the parasites for different types of cells, the whole model is affected by an offset of long-tailed distribution, that is, the classification model may tend to identify the head category with a larger number during category recognition, resulting in a recognition error. Therefore, focal_loss and CB_focal_loss are applied separately.

4.1 Detection head focal_loss

1) focal_loss

$$FL(p_t) = -\alpha_t(1 - p_t)^\gamma \log(p_t)$$

where $\alpha \in (0,+e\_$, pt $\in [0,1]$, $\gamma \in \{1,2,3\}$, and $\alpha(1\text{-pt})$ is a modulation coefficient.
During detection, due to the small number of the parasites, and the background category of detection being a large number of blood cells, the parasites are of the tail category, and have the tendency to be identified as the background category. At this time, if there is a misclassified sample, pt is very small, and then its modulation coefficient tends to 1, that is, the sample is a difficult sample, and its contribution to the whole loss is 100%. When pt tends to 1, the sample is correctly classified, and is a simple sample, and its modulation coefficient tends to 0. At this time, the contribution of the sample to the total loss is very small, so the loss function may effectively alleviate the detection problem caused by long-tailed distribution.

4.2 Classification head CB_focal

Due to different numbers of the parasites in different categories during parasite data collection, the model faces a serious long-tail problem in classification and identification, that is, a classification result tends to a head parasite category with a large number. Similar with the loss functions of the detection head, improvements are further made in terms of the classification problem.

An effective sample theory is employed, that is, in a deep learning model, samples of different categories have different contribution degrees to model optimization; and in addition, for a certain category, there is a saturated data volume, so that a continued increase in data in this category has no significant effect on model optimization, and then the loss functions may be weighted by using an effective sample number.

Assuming that a total capacity of a certain category of samples is N, the collected data is all sampled from the total set. There are

$$E_n = (1 - \beta^n)/(1 - \beta) \quad (1)$$

$$\beta = (N - 1)/N \quad (2)$$

where En is an expected value of an effective sample of a certain category; and N is a total number of samples of this category.

When n=1, the effective sample is expected as 1. Assuming that n=N-1, the above equation is workable. Then, when n=N, the probability of p=En-1/N coincides with the sample that has been sampled previously. At this time,

$$E_n = pE_{n-1} + (1-p)(E_{n-1}+1) = 1 + \frac{N-1}{N}E_{n-1}. \quad (3)$$

It can be seen from the equations (1), (2) and (3) that

$$E_n = 1 + \beta \frac{1 - \beta^{n-1}}{1 - \beta} = \frac{1 - \beta + \beta - \beta^n}{1 - \beta} = \frac{1 - \beta^n}{1 - \beta}.$$

and also due to

$$E_n = (1 - \beta^n)/(1 - \beta) = \sum_{j=1}^{n} \beta^{j-1}. \quad (4),$$

it can be get that

$$N = \lim_{n \to \infty} \sum_{j=1}^{n} \beta^{j-1} = 1/(1 - \beta). \quad (5).$$

However, because an exact total sample number of a certain category cannot be known, a number of collected samples of a certain category is used for replacing a total effective sample number. Therefore, at this time, there is a weighted loss function:

$$CB(\mathbf{p}, y) = \frac{1}{E_{n_y}} \mathcal{L}(\mathbf{p}, y) = \frac{1 - \beta}{1 - \beta^{n_y}} \mathcal{L}(\mathbf{p}, y)$$

The long tail problem in the classification problem may be alleviated to a certain degree by reverse weighting with an effective sample number.

4.3 Semantic segmentation head loss function Jaccard

Similarly, in a pixel point classification (semantic segmentation) task, it is also faced with the problem that a small number of the pixel points occupied by the positive samples, and a large number of the pixel points occupied by the negative samples, resulting in a more serious problem of imbalance samples. The loss function Jaccard is used to alleviate this problem.

$$J(A, B) = \frac{|A \cap B|}{|A \cup B|} = \frac{|A \cap B|}{|A| + |B| - |A \cap B|}$$

4.4 Determination on category

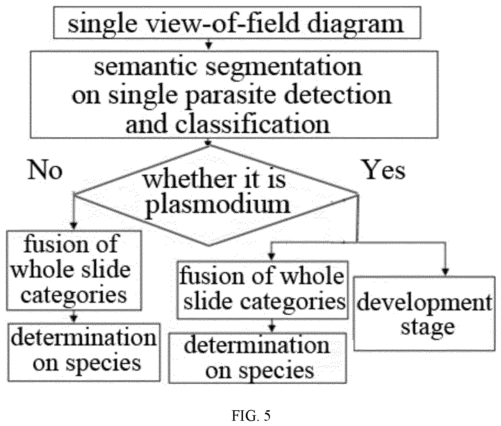

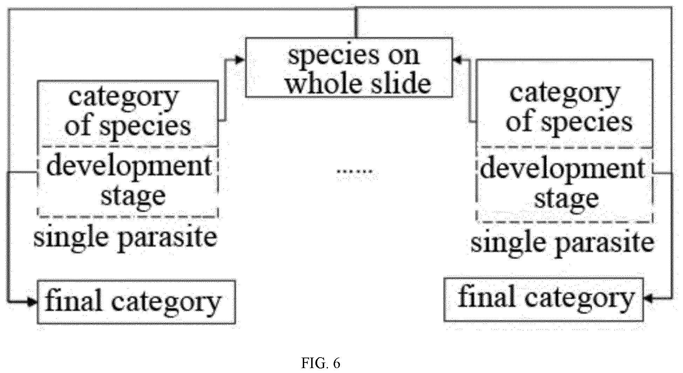

The category of the plasmodium is formed by two levels: the first level is a specific species; and the second level is the development stage of the species. The two levels collectively constitute the category of the plasmodium. Other parasites have only one-level category. Generally, there is only one species on a blood slide. Therefore, the species can be only identified in combination with the category of each parasite in the whole blood slide. As shown in Figs. 5-6, the images acquired by the microscopic imaging device form a blood slide image database. For each image in the database, the algorithm shown in step 3 is applied to detect a single parasite and determine its species and development stage category. Then, the species of the parasites on the whole slide are fused to determine a final parasite species.

What are described above are merely preferred specific implementations of the present application, but the scope of protection of the present application is not limited thereto. Equivalent substitutions or changes, that are made by any of those skilled in the art, within the technical scope disclosed by the present application according to the technical solution and invention concepts thereof of the present application should all fall within the scope of protection of the present application.

**Industrial applicability**

The embodiments of the present application provide a method of classifying development stages of parasite species and image pixels from bottom to top, which uses a microscope or a slide automatic scanning device to digitize a slide, constructs a deep learning algorithm based on Transformer to detect the parasites view by view, and uses functions focal_loss, CB_focal_loss and Jaccard to suppress long-tailed distribution. The present application can identify the parasites only with a thin blood film, may further reduce the time and the labor cost of detection, and improve the level of detecting the parasites in local areas. Further, the present application may identify species and development stages of the parasites, is high in efficiency, is fast in speed, and reduces the labor cost and a regional medical difference.

**Claims**

1. A method of classifying development stages of parasite species and image pixels from bottom to top, comprising the following steps:

   S1, preparation of a training set and a test set: seamlessly photographing a blood slide for labeling with a microscopic imaging device view by view to acquire images, seamlessly connecting boundary parts of the images by stitching adjacent images to obtain an image set for labeling, labeling positions, categories, development stages of the parasites and categories of pixel points on a single image in the image set for labeling, generating labeling data, and dividing the labeling data into the training set and the test set;
   S2, construction of a blood parasite classification-detection-segmentation model based on Transformer: constructing a blood parasite classification-detection-segmentation model based on Transformer by optimizing the model using a loss function to suppress long-tailed distribution, and training the model using the training set and the test set to obtain the blood parasite classification-detection-segmentation model;
   S3, whole slide collection and stitching: seamlessly photographing a to-be-detected blood slide with the microscopic imaging device view by view to acquire images, and seamlessly connecting boundary parts of the images by stitching adjacent images to obtain a to-be-detected image set; and
   S4, detection: inputting the to-be-detected image set into the blood parasite classification-detection-segmentation model, detecting and classifying the species and the development stages of blood parasites to obtain a detection result, and outputting the detection result to complete detection.

**2.** The method of classifying development stages of parasite species and image pixels from bottom to top according to claim 1, wherein,
step S2 comprises:

S21, construction of the model: constructing a topological structure of the blood parasite classification-detection-segmentation model based on Transformer, wherein the blood parasite classification-detection-segmentation model is used detecting the positions, the categories, the development stages of the parasites and the categories of pixel points on the single image;

S22, construction of an optimized object: optimizing the blood parasite classification-detection-segmentation model based on Transformer by using functions focal_loss, CB_focal_loss and Jaccard, and suppressing long-tailed distribution with the loss function; and

S23, training of model: training the model with the training set and the test set, to obtain the blood parasite classification-detection-segmentation model.

**3.** The method of classifying development stages of parasite species and image pixels from bottom to top according to claim 2, wherein in step S21, the blood parasite classification-detection-segmentation model based on Transformer comprises an encoder, a decoder and a multi-layer neural network mapping layer that are sequentially arranged,

the encoder comprises at least two sequentially connected multi-head self-attention modules, and is used for dividing the single image into k image blocks, linearly transforming the image blocks by a query matrix Qi, a value matrix Vi and a keyword matrix Ki of a first multi-head self-attention module to obtain feature expressions of the image blocks, superimposing the feature expressions with a feature of the multi-head self-attention module and then inputting into the next multi-head self-attention module, until the last multi-head self-attention module obtains a final feature expression of the image blocks, and superimposing the final feature expression of the image blocks with a position code to obtain an input feature of the decoder;

the decoder comprises at least one sequentially connected multi-head self-attention module, and is used for decoding the input feature of the decoder by at least two multi-head self-attention modules to obtain a decoded feature vector; and

the multi-layer neural network mapping layer is used for calculating the decoded feature vector to obtain a corresponding feature vector, and performing linear mapping to obtain a coordinate of a detection bounding box $(x_n, y_n, w_n, h_n)$ and a confidence level.

**4.** The method of classifying development stages of parasite species and image pixels from bottom to top according to claim 3, wherein the single image has a data pixel of 608*608, wherein k is 16, and an image block pixel is 38*38; and the encoder comprises four sequentially connected multi-head self-attention modules, the decoder comprises four sequentially connected multi-head self-attention modules, and the multi-layer neural network is a three-layer fully connected layer neural network.

**5.** The method of classifying development stages of parasite species and image pixels from bottom to top according to claim 1, wherein, in step S21, an algorithm for constructing the blood parasite classification-detection-segmentation model based on Transformer further comprises the following one or more:
SSD, FPN, Fast R-CNN, faster R-CNN, mask R-CNN, efficentNet, YOLO/v2/v3/v4/v5, RetianNet, Deeplabv1/v2v/3, Unet, MaskRcnn.

**6.** The method of classifying development stages of parasite species and image pixels from bottom to top according to claim 2, wherein, in step S22, the function focal_loss is:

$$\mathrm{FL}(p_t) = -\alpha_t(1 - p_t)^\gamma \log(p_t)$$

where $FL(p_t)$ is improved cross entropy; $\gamma$ is a focusing parameter; $\alpha$ is an inter-category weight parameter; and $\alpha(1 - p_t)$ is a modulation coefficient.

**7.** The method of classifying development stages of parasite species and image pixels from bottom to top according to claim 6, wherein,

$$\alpha \in (0, +\infty), \quad p_t \in [0,1], \quad \gamma \in \{1,2,3\},$$

the function focal_loss is used for suppressing long-tailed distribution with a small number of parasites and a large number of background categories, and the background categories are blood cells;

if a sample containing parasites is mistakenly identified as the background category, the modulation coefficient tends to 1, and the sample containing parasites is a difficult sample; and the function focal_loss makes the blood parasite classification-detection-segmentation model based on Transformer focus more on the difficult sample during training by increasing a weight of the difficult sample.

8. The method of classifying development stages of parasite species and image pixels from bottom to top according to claim 2, wherein, in step S22, the function CB_focal is:

$$\mathbf{CB}(\mathbf{p}, y) = \frac{1}{E_{n_y}} \mathcal{L}(\mathbf{p}, y) = \frac{1 - \beta}{1 - \beta^{n_y}} \mathcal{L}(\mathbf{p}, y)$$

where

$$E_n = (1 - \beta^n)/(1 - \beta);$$

$$\beta = (N - 1)/N,$$

*En* is an expected value of an effective sample of a certain category; and *N* is a total number of samples of this category.

the function CB_focal is used for alleviating the long tail problem in the parasite classification problems by reverse weighting with an effective sample number.

9. The method of classifying development stages of parasite species and image pixels from bottom to top according to claim 2, wherein,

in step S22, the loss function Jaccard is:

$$J(A, B) = \frac{|A \cap B|}{|A \cup B|} = \frac{|A \cap B|}{|A| + |B| - |A \cap B|},$$

wherein A is a predicted value, and B is a true value; and

the loss function Jaccard is employed in a pixel point classification task, and used for alleviating imbalance samples with a small number of pixel points occupied by positive samples and a large number of pixel points occupied by negative samples.

10. The method of classifying the development stages of the parasite species and the image pixels from bottom to top according to claim 2, wherein, in step S4, if the parasites are plasmodium, the plasmodium species category of each image in the image set are fused to determine the final species category of the blood smear, and the period category is determined by the specific period of the plasmodium in the single image.

Seamlessly photograph a blood slide for labeling with a microscopic imaging device view by view to acquire images, and seamlessly connect boundary parts of the images by stitching adjacent images to obtain an image set for labeling; and label positions, categories, development stages of the parasites and categories of pixel points on a single image in the image set for labeling, generate labeling data, and divide the labeling data into the training set and the test set — S1

Construct a blood parasite classification-detection-segmentation model based on Transformer, optimize the model by using a loss function to suppress long-tailed distribution, and train the model by using the training set and the test set to obtain the blood parasite classification-detection-segmentation model — S2

Seamlessly photograph a to-be-detected blood slide with the microscopic imaging device view by view to acquire images, and seamlessly connect boundary parts of the images by stitching adjacent images to obtain a to-be-detected image set — S3

Input the to-be-detected image set into the blood parasite classification-detection-segmentation model, detect and classify the species and the development stages of blood parasites to obtain a detection result, and output the detection result to complete detection — S4

FIG. 1

S21

Construction of model

S22

Construction of an
optimized object

S23

Training of model

FIG. 2

FIG. 3

FIG. 4

FIG. 5

FIG. 6

## INTERNATIONAL SEARCH REPORT

| | International application No. |
|---|---|
| | **PCT/CN2022/086750** |

**A.    CLASSIFICATION OF SUBJECT MATTER**

G06T 7/00(2017.01)i;  G06T 7/11(2017.01)i;  G06K 9/62(2022.01)i;  G06N 3/04(2006.01)i;  G06N 3/08(2006.01)i

According to International Patent Classification (IPC) or to both national classification and IPC

**B.    FIELDS SEARCHED**

Minimum documentation searched (classification system followed by classification symbols)

G06T G06K G06N

Documentation searched other than minimum documentation to the extent that such documents are included in the fields searched

Electronic data base consulted during the international search (name of data base and, where practicable, search terms used)

CNABS; CNTXT; CNKI; WPABS; DWPI; USTXT; WOTXT; EPTXT; IEEE: 北京小蝇科技有限责任公司, 李柏蕤, 连荷清, 寄生虫, 发育, 图像, 分类, 检测, 自注意力, 损失函数, 抑制, 长尾, parasite, development, image, classification, detection, transform, loss function, inhibit, long-tail

**C.    DOCUMENTS CONSIDERED TO BE RELEVANT**

| Category* | Citation of document, with indication, where appropriate, of the relevant passages | Relevant to claim No. |
|---|---|---|
| PX | CN 113256636 A (BEIJING XIAOYING TECHNOLOGY CO., LTD.) 13 August 2021 (2021-08-13)<br>claims 1-10, and description, paragraphs [0036]-[0057] | 1-10 |
| Y | FUHAD, K. M. F. et al. "Deep Learning Based Automatic Malaria Parasite Detection from Blood Smear and Its Smartphone Based Application"<br>*Diagnostics,* Vol. 10, No. 5, 20 May 2020 (2020-05-20),<br>pages 1-22 | 1-10 |
| Y | CUI, Yin et al. "Class-Balanced Loss Based on Effective Number of Samples"<br>*arXiv:1901.05555v1,* 16 January 2019 (2019-01-16),<br>pages 1-11 | 1-10 |
| Y | KARIMI, D. et al. "Convolution-Free Medical Image Segmentation using Transformers"<br>*arXiv:2102.13645v1,* 26 February 2021 (2021-02-26),<br>pages 1-7 | 1-10 |
| A | CN 110807426 A (BEIJING LUOMAYI TECHNOLOGY CO., LTD.) 18 February 2020 (2020-02-18)<br>entire document | 1-10 |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 May 2022** | **27 May 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/086750** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 112749667 A (NINGBO INSTITUTE OF MATERIAL TECHNOLOGY AND ENGINEERING, CHINESE ACADEMY OF SCIENCES) 04 May 2021 (2021-05-04) entire document | 1-10 |

Form PCT/ISA/210 (second sheet) (January 2015)

INTERNATIONAL SEARCH REPORT
Information on patent family members

International application No.

**PCT/CN2022/086750**

| Patent document cited in search report | | | Publication date (day/month/year) | Patent family member(s) | | | Publication date (day/month/year) |
|---|---|---|---|---|---|---|---|
| CN | 113256636 | A | 13 August 2021 | CN | 113256636 | B | 05 November 2021 |
| CN | 110807426 | A | 18 February 2020 | None | | | |
| CN | 112749667 | A | 04 May 2021 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110802685